(19) Europäisches Patentamt
European Patent Office
Office européen des brevets

(11) **EP 3 917 369 B1**

(12) **EUROPEAN PATENT SPECIFICATION**

(45) Date of publication and mention
of the grant of the patent:
**22.10.2025 Bulletin 2025/43**

(21) Application number: **20703544.5**

(22) Date of filing: **28.01.2020**

(51) International Patent Classification (IPC):
**B32B 3/04** *(2006.01)*    **B32B 3/26** *(2006.01)*
**B32B 5/26** *(2006.01)*    **B32B 27/12** *(2006.01)*
**B32B 5/02** *(2006.01)*    **A47L 13/16** *(2006.01)*
**A47L 17/08** *(2006.01)*

(52) Cooperative Patent Classification (CPC):
**A47L 13/16; A47L 17/08; B32B 3/04; B32B 3/266;**
**B32B 5/022; B32B 5/024; B32B 5/026;**
**B32B 5/028; B32B 5/26; B32B 27/12;**
B32B 2307/72; B32B 2307/726; B32B 2307/732;
B32B 2432/00

(86) International application number:
**PCT/IB2020/050660**

(87) International publication number:
**WO 2020/157658 (06.08.2020 Gazette 2020/32)**

(54) **SCOURING PADS**

SPÜLSCHWAMM

RINÇAGE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **29.01.2019 US 201962798002 P**

(43) Date of publication of application:
**08.12.2021 Bulletin 2021/49**

(73) Proprietor: **3M Innovative Properties Company**
**Saint Paul, Minnesota 55133-3427 (US)**

(72) Inventors:
• **TRUONG, Myhanh T.**
**Saint Paul, Minnesota 55133-3427 (US)**
• **TUMAN, Scott J.**
**Saint Paul, Minnesota 55133-3427 (US)**
• **SCHMALL, Kaylee R.**
**Saint Paul, Minnesota 55133-3427 (US)**
• **TOUPAL, Alexander S.**
**Saint Paul, Minnesota 55133-3427 (US)**
• **KADOMA, Ignatius A.**
**Saint Paul, Minnesota 55133-3427 (US)**

(74) Representative: **Vossius & Partner**
**Patentanwälte Rechtsanwälte mbB**
**Siebertstraße 3**
**81675 München (DE)**

(56) References cited:
**EP-A2- 1 023 884**    **WO-A1-2018/063458**
**US-A- 5 626 512**

## Description

### Field of the Invention

The present invention relates generally to the field of cleaning articles. In particular, the present invention is a scouring pad.

### Background

Scouring pads are widely used to clean surfaces such as household surfaces, including those in the home as well as vehicular surfaces. The scouring pad is generally used with water and a soap or detergent, with a scouring surface of the scouring pad being used to clean a surface. Such surfaces include dishes, utensils, glasses, pots, pans, grills, walls, floors, countertops, and vehicular surfaces and windows.

Scouring materials are produced in many forms, including nonwoven webs (for example, the low density nonwoven abrasive webs described in U.S. Pat. No. 2,958,593). Following manufacture, a web of scouring material may be cut into individual pieces of a size suitable for hand use (for example, the individual rectangular pads described in U.S. Pat. No. 2,958,593) or it may be left to the end user to divide the web into pieces of a convenient size when required (as described, for example, in WO 00/006341 and U.S. Pat. No. 5,712,210). Examples of non-scratch scouring pads are sold under the trade name "Scotch-Brite™" by 3M Company of Saint Paul, Minnesota. A particular non-scratch scouring pad is the "Scotch-Brite™ Dobie Cleaning Pad" by 3M Company of Saint Paul, Minnesota, composed of polyurethane foam pad and enclosed in a netting or mesh.

WO 2018/063458 A1 and EP 1 023 884 A2 describe cleaning articles including a filler and a wrapping surrounding the filler.

### Summary

In one embodiment, the present invention is a cleaning article including a fibrous filler and a wrapping as described in the appended independent claim.

In an embodiment of the present invention the cleaning article may be a scouring pad for household cleaning. The article may clean at least about 0.1 food soil panels in 5,550 cycles.

The above summary of the present disclosure is not intended to describe each disclosed embodiment or every implementation of the present invention. The description that follows more particularly exemplifies illustrative embodiments. In several places throughout the application, guidance is provided through lists of examples, which examples can be used in various combinations. In each instance, the recited list serves only as a representative group and should not be interpreted as an exhaustive list.

### Brief Description of the Drawings

FIG. 1 is a photograph of a scouring pad of the present invention.
FIG. 2 is a photograph of a scouring pad of the present invention with a wrapping being positioned around a filler.

While the above-identified drawings and figures set forth embodiments of the invention, other embodiments are also contemplated, as noted in the discussion. In all cases, this disclosure presents the invention by way of representation and not limitation. It should be understood that numerous other modifications and embodiments can be devised by those skilled in the art, which fall within the scope and spirit of this invention. The figures may not be drawn to scale.

### Detailed Description

The present invention is a cleaning article 10 including a fibrous filler 12 surrounded by a wrapping 14. The cleaning article 10 is a scouring pad used for household cleaning applications, such as cleaning dishes as well as other surfaces such as countertops, walls, shower curtains, and automotive surfaces or for cosmetic cleaning applications. The construction of the cleaning article 10 provides various performance and environmental related advantages. For example, the cleaning article 10 has increased suds generation, requires less force to compress, greater water absorption, and overall weight reduction. The current invention also enables many opportunities for environmentally sustainable aspects, such as by using environmentally sustainable raw materials. For example, in one embodiment, the cleaning article 10 is at least partially biodegradable, bio-based recyclable, compostable, or made of recycled material. The cleaning articles of the present invention provide these benefits while maintaining sufficient scouring capabilities.

As used herein, a material is "degradable" when it is capable of degrading as a result of exposure to the environmental effects of sunlight, heat, water, oxygen, pollutants, microorganisms, insects and/or animals. Usually such materials are naturally occurring and are usually "biodegradable". As used herein, "biodegradable" materials are those which are degraded by microorganisms or by enzymes and the like produced by such microorganisms. As used herein, "biodegradable" refers to materials or products that meet the requirements of ASTM D6400-12 (2012), which is the standard used to establish whether materials or products satisfy the requirements for labeling as "compostable in municipal and industrial composting facilities."

As used herein, a material is "bio-based" when it contains at least 1% carbon-14, particularly at least 5% carbon-14, and more particularly at least 10% carbon-14.

As used herein, a material is "compostable" when it is capable of breaking down into natural elements in a compost environment. As used herein, "compostable" refers to materials that undergo degradation by biological processes during composting to yield carbon dioxide, water, inorganic compounds, and biomass at a rate consistent with other compostable materials and leaves no visible, distinguishable or toxic residue. As used herein, "biodegradable" refers to materials or products that meet the requirements of ASTM D6400.

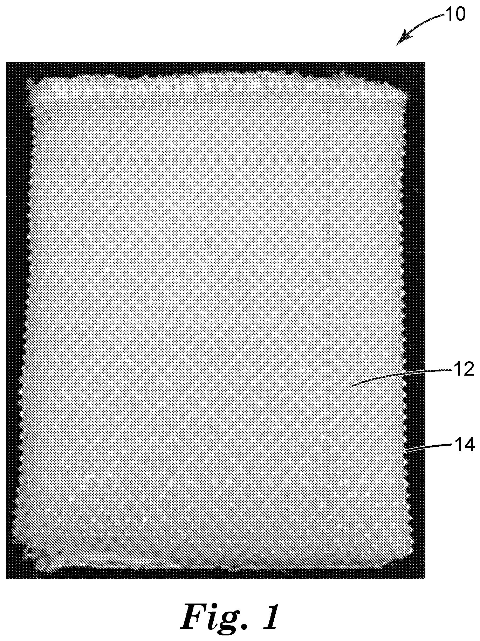

FIG. 1 shows a photograph of the cleaning article 10 of the present invention. While FIG. 1 depicts the cleaning article 10 as being rectangular in shape, the cleaning article 10 may take any shape without departing from the intended scope of the present invention. The cleaning article 10 generally includes a fibrous filler 12 and a wrapping 14. The fibrous filler 12 is non-bonded or bonded via melty fibers. The fibrous filler 12 is a three-dimensional web of entangled fibers that are bonded to one another at their mutual contact points by a bicomponent fiber, conjugate fibers and/or low melting fiber acting as the binder component. One function of the fibrous filler 12 is to absorb liquid. In one embodiment, the fibrous filler 12 has an absorption rate of at least about 10 times the dry weight of the fibrous filler 12, particularly about 15 times the dry weight of the fibrous filler 12, more particularly about 20 times the dry weight of the fibrous filler 12, and most particularly about 30 times the dry weight of the fibrous filler 12.

The fibrous filler 12 requires less material to absorb the same or more liquid than other materials currently on the market for absorbing liquid, such as foam. Because the fibrous filler 12 requires less material, the cleaning article 10 can be made at lower cost and is more sustainable than other current products in the market. In one embodiment, the fibrous filler 12 has a density of about $0.03 \text{ g/m}^3$ or less, particularly about $0.025 \text{ g/m}^3$ or less, and more particularly about $0.02 \text{ g/m}^3$ or less.

The fibrous filler 12 also has a lower compression force than other materials used to absorb liquid currently in the market. Thus, the fibrous filler 12 requires less compression force to squeeze liquid out of the fibrous filler 12, resulting in easier rinsing and quicker drying time. In one embodiment, the fibrous filler 12 has a compression of about 9 Kgf or less, particularly about 4 Kgf or less, and more particularly about 2 Kgf or less.

The fibrous filler 12 is composed of entangled fibers 16. In one embodiment, the fiber input may include, but is not limited to, synthetic thermoplastic polymer staple fibers. The fiber component may further comprise bicomponent fibers and/or conjugate fibers which are typically and preferably the binder component of the fiber composition. In one embodiment, the fiber deniers range between about 2 denier and about 1000 denier, particularly between about 2 denier and about 100 denier, and more particularly between about 3 denier and about 15 denier. In one embodiment, the staple fiber lengths are between about 30 mm and about 120 mm, particularly between about 40 mm and about 100 mm, and more particularly between about 50 mm and about 60 mm.

In one embodiment, the fibrous filler 12 is composed of a sustainable material. That is, the fibrous material may be biodegradable, bio-based recyclable, compostable, or made of recycled material. Examples of suitable, sustainable materials that the fibrous filler can be composed of include, but are not limited to: natural fibers, naturally derived fibers, recycled synthetic fibers, or biodegradable synthetic fibers. Examples of natural fibers include, but are not limited to: bamboo, sisal, agave, coconut, flax, hemp, and combinations thereof. Examples of naturally derived fibers, including naturally derived fibers from renewable resources include, but are not limited to: rayon, rayon from bamboo, polylactide (PLA), and combinations thereof. Examples of recycled synthetic fibers include, but are not limited to, recycled PET, recycled nylon, combinations thereof, and can also include post-industrial and/or post-consumer material. Examples of biodegradable synthetic fibers include, but are not limited to: viscose and melt processable fibers such as polylactic acid (PLA), polybutylene succinate (PBS), polyglycolic acid, polyester amide, dimer acid polyamide, polyhydroxyalkanoate (PHA), Poly hydroxy butyrate (PHB), a blend of PLA/PBS, a blend of PLA/Dimer acid polyamide, a blend of PBS/dimer acid polyamide, a blend of PHA/PHB, a blend of PHA/PLA, a blend of PHA/PBS, all the afore mentioned resins with a hydrophilic surfactant agent compounded into the polymer matrix, and combinations thereof. Examples of hydrophilic surfactants include, but are not limited to: polyoxyethylene coconut monoethanolamide, sodium salt of butanedioic acid, sulfo-, 1,4-bis(2-ethylhexyl) ester, and a blend of these surfactants in a ratio of about 50:50.

In one embodiment, the fibrous filler 12 is a non-woven filler. The non-woven filler can be made through an air-laid process, a vertical lapping process, a carding process, or a blown microfiber process. In the air-laid process, the non-woven filler is composed of fibers that are per-made, short-cut, and crimped. In one embodiment, the fibers have a length of between about 1 inch and about 3 inches and have about 5 to about crimps per inch. The fibers are provided in tightly packed "bale" and run through an opener. An example of a suitable opener is a Reiter Bale Opener (Bracker, France). The fibers are then individualized in fiber opening equipment. An example of a suitable fiber opening equipment is a Hergeth Hollingsworth carding machine (Aachen, Germany). The fibers are then conveyed to an air-laid machine. An example of a suitable air-laid machine is a Rando Webber (Macedon, NY). In one embodiment, the output from the air-laid machine can range in basis weight of from about 25 $g/m^2$ to about 2500 $g/m^2$ at thicknesses of up to about 3 inches.

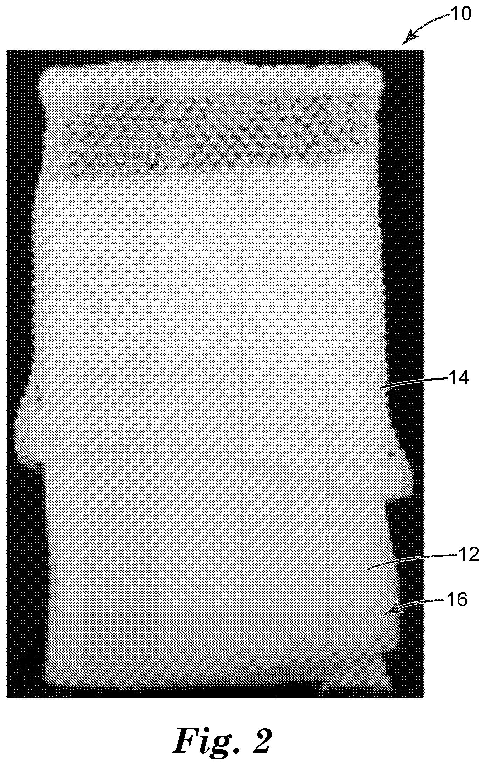

In the vertical lapping process, the vertically lapped materials can be manufactured using standard fiber blending and fiber carding equipment known in the art to form a nonwoven web. The resulting nonwoven web can then feed into a vertical lap machine that folded the web back and forth onto itself, resulting in a nonwoven mat with a vertically-lapped structure. The nonwoven mat can then be thermally bonded. In one embodiment, the thermal bond is achieved by passing the nonwoven web through a through-air oven. Such a vertically lapped material may be constructed with the use of a machine disclosed in International Publication No. WO 99/61693, and entitled "A DEVICE FOR PERPENDICULAR STRATIFICATION OF PLANARY FIBROUS SHAPES," the V-Lap Vertical Lapping System manufactured by V-Lap PTY Ltd, Australia and as described for example in WO2006/092029, and STRUTO materials as manufactured using the Struto system (Struto International Inc.) as described in Chapter 2.12 in Russell S. J.: Handbook of Nonwovens, Woodhead Publishing Limited, Cambridge, England, 2007, In the vertical lapping process, very thick, low density webs with relatively good compression resistance can be produced. This is achieved by creating vertical "struts" by taking a very flat web and folding it into vertical pleats, as shown in the FIG. 2. FIG. 2 also provides a cross-sectional view of the resulting web. The vertical lapping equipment output can have thicknesses of between about 0.5 inches and about 2 inches.

Other materials can be added to the fibrous filler 12 for special purposes, including, but not limited to: grinding aids, lubricants, wetting agents, surfactants, pigments, dyes, colorants, fillers, fragrances, coupling agents, plasticizers, mild abrasives, cross-linkers, antistatic agents, antioxidants, antimicrobial agents, anti-fungal agents, particles, and suspending agents. The materials can be added for functional purposes or aesthetic purposes. For example, dyes, colorants, fragrances and particles can serve aesthetic purposes.

The wrapping 14 of the present invention is a porous material and is used primarily to clean or scour debris from a surface. The wrapping 14 surrounds the fibrous filler and provides a flexible, abrasive surface useful for removing debris when contacted and rubbed against a surface while also being breathable. This allows for liquid to be absorbed and rinsed from the fibrous filler.

The wrapping 14 can include a plurality of filaments and a plurality of monofilaments overlapping each other. In the present invention the wrapping 14 is a mesh-like material in which the monofilaments may overlap the filaments and form a twisted structure. The wrapping 14 includes a backbone structure and a network structure in the backbone structure. The backbone structure of the wrapping formed by the plurality of filaments and the plurality of monofilaments, and the network structure of the wrapping 14 is formed by the plurality of filaments. The plurality of filaments are disposed to be extended in different predetermined directions and cross with each other, and thereby form the lattice-like backbone structure. That is, the backbone structure may be formed in continuous polygonal shapes.

The wrapping 14 is wrapped around and encompass the fibrous filler by any means known to those of skill in the art. For example, the wrapping 14 may be maintained to the fibrous filler 12 by using: adhesives, clamps, sealing, sewing, or welding. In one embodiment, the wrapping is in the form of a sleeve of a netted material that is wrapped around the fibrous filler and sewn. FIG. 2 shows the wrapping 14 being positioned around the fibrous filler 12. In another embodiment, the wrapping 14 is in the form of a sleeve made of a combination of a netted material and a woven cloth. Although the wrapping 14 is depicted as completely surrounding the fibrous filler 12, the wrapping can cover any amount of the fibrous filler 12 without departing from the intended scope of the present invention.

The wrapping 14 can be composed of any material known in the art that scours and is breathable. For example, the wrapping 14 may be composed of materials including but not limited to a netting, nonwoven, woven cloth, knit cloth, microfiber, perforated film, or a combination thereof. For example, the wrapping 14 may be composed of materials including, but not limited to: metal wires, filaments, slit film filaments, latticed fabric of a fiber, or combinations thereof. The scouring ability may be a result of the material used or the form, shape and cut of the wrapping material. For example, the wrapping 14 may include gaps, grooves, protrusions, or other texture. The gaps in the wrapping 14 can be produced by any known method in the art, including, but not limited to, punching out or embossing. In one embodiment, the wrapping 14 allows the cleaning article to clean at least about 0.1 food soil panels in 5,550 cycles, particularly at least about 1 food soil panels in 5,550 cycles, and more particularly at least about 2.5 food soil panels in 5,550 cycles.

Although the wrapping 14 provides scouring capabilities to the cleaning article 10 of the present invention, in one embodiment, the cleaning article 10 of the present invention is non-scratching, meaning that it does not scratch the surface being cleaned. The wrapping 14 therefore is abrasive enough to sufficiently clean a surface while minimizing any scratching of the surface. In one embodiment, the cleaning article 10 has a Schiefer scratch rating of about 3.5 or less and particularly of about 2 or less.

In one embodiment, the wrapping 14 is composed of a sustainable material. That is, the wrapping 14 may be biodegradable, bio-based recyclable, compostable, or made of recycled material. In one embodiment, the wrapping 14 can be made from recycled plastic such as post-consumer plastic bottles. Examples of suitable, sustainable materials that the wrapping 14 can be composed of include, but are not limited to: natural fibers, naturally derived fibers, recycled synthetic fibers, or biodegradable synthetic fibers. Examples of natural fibers include, but are not limited to: bamboo, sisal, flax, hemp, and combinations thereof. Examples of naturally derived fibers, including naturally derived fibers from renewable resources, include, but are not limited to: rayon, rayon from bamboo, polylactide (PLA), and combinations thereof. Examples of recycled synthetic fibers include, but are not limited to, recycled PET, recycled nylon, combinations thereof, and can also include post-industrial and/or post-consumer material. Examples of biodegradable synthetic fibers include, but are not limited to: viscose and melt processable fibers such as polylactic acid (PLA), polybutylene succinate (PBS), polyglycolic acid, polyester amide, dimer acid polyamide, polyhydroxyalkanoate (PHA), Poly hydroxy butyrate (PHB), a blend of PLA/PBS, a blend of PLA/Dimer acid polyamide, a blend of PBS/dimer acid polyamide, a blend of PHA/PHB, a blend of PHA/PLA, a blend of PHA/PBS, all the afore mentioned resins with a hydrophilic surfactant agent compounded into the polymer matrix, and combinations thereof. Examples of hydrophilic surfactants include, but are not limited to: polyoxyethylene coconut monoethanolamide, sodium salt of butanedioic acid, sulfo-, 1,4-bis(2-ethylhexyl) ester, and a blend of these surfactants in a ratio of about 50:50.

EXAMPLES

The present invention is more particularly described in the following examples that are intended as illustrations only, since numerous modifications and variations within the scope of the present invention will be apparent to those skilled in the art. Unless otherwise noted, all parts, percentages, and ratios reported in the following examples are on a weight basis.

MATERIALS

| Trade name | Material description | Source/Supplier |
|---|---|---|
| SCOTCH-BRITE™ Dobie Scouring Pad | Polyurethane foam wrapped in Polypropylene mesh | 3M Company, St. Paul, MN, USA |
| Buf-Puf™ Facial Sponge | Airlaid Nonwoven pad | 3M Company, St. Paul, MN, USA |
| Nylon Fiber 15 denier x 52 mm | Staple Fiber | Dupont, Wilmington, DE, USA |
| Polyester 15 denier LMF 937A Melty Fiber | Melty Fiber | Huvis, Shanghai, China |
| Recycled PET Fiber 40 denier x 51mm | Staple Fiber | Stein Fibers Ltd, Albany, NY, USA |
| Ingeo 1.3d 811 PLA Fiber | Staple Fiber | Natureworks, Minnetonka, MN, USA |
| Scour Daddy™ | Temperature sensitive Coarse Polyurethane foam wrapped in Polypropylene mesh | Scrub Daddy Inc., Folcroft, PA, USA |

## Example 1

The fibrous filler of Example 1 was an extremely lofty nonwoven web manufactured through a vertically lapped nonwoven process. The staple fiber used was a recycled polyester (PET) fiber with a bicomponent fiber used as a binder component.

For the wrapping, the polypropylene mesh was removed from a SCOTCH-BRITE™ Dobie Scouring Pad via ripping one end seam. The vertically lapped nonwoven web was then cut using scissors to a length of 3.7 IN - 4.3 IN and a width of 2.5 IN - 3.0 IN and was inserted by hand into the polypropylene mesh and the end seam was resewn.

## Examples 2 - 5

The fibrous filler of Examples 2 - 5 were an extremely lofty nonwoven web manufactured by using a conventional air-laying web forming machine (available from the Rando Machine Corporation, Macedon, New York, under the trade designation "RANDO-WEBBER"). If different staple fibers were used, the staple fibers were blended on a percent weight basis. The thickness of the nonwoven webs ranged from 15 - 30.0 mm and the area weight (basis weight) of the web ranged from 100 to 400 grams per square meter (gsm). The nonwoven web was then passed through a through-air oven having a temperature ranging from 100-250°C, yielding a prebonded, lofty nonwoven web.

For the wrapping, a netted polypropylene mesh was removed from SCOTCH-BRITE™ Dobie Scouring Pads via ripping one end seam. The nonwoven webs were then cut using scissors to a length of 3.7 IN - 4.3 IN and a width of 2.5 IN - 3.0 IN and were then inserted by hand into the polypropylene mesh and the end seam was resewn.

Table 1 lists the nonwoven materials used in Examples 1-5.

Table 1.

|  | Vertically Lapped Nonwoven | Buf-Puf™ Facial Sponge | Recycled PET Fiber 40 denier x 51mm | Nylon Fiber 15 denier x 52 mm | Ingeo 1.3d 811 PLA Fiber | Polyester 15 denier LMF 937A Melty Fiber |
|---|---|---|---|---|---|---|
| Example 1 | 100% | - | - | - | - | - |
| Example 2 | - | 100% | - | - | - | - |
| Example 3 | - | - | - | 80% | - | 20% |
| Example 4 | - | - | 80% | - | - | 20% |
| Example 5 | - | - | 70% | - | 30% | - |

## Comparative Examples 1 and 2

Table 2 lists the materials used in Comparative Examples A and B. Comparative Examples A and B are commercial products and do not include a fibrous filler material.

Table 2.

| Example | Product |
|---|---|
| Comparative Example A | Scotch-Brite™ Dobie Scouring Pad |
| Comparative Example B | Scrub Daddy® Scour Daddy |

TEST METHODS AND RESULTS

Schiefer Scratch Test

Schiefer scratch testing was performed to evaluate the relative abrasiveness of the fibrous filler material of Example 1 covered with polypropylene mesh from SCOTCH-BRITE™ Dobie Scouring Pads and the products of Comparative Examples A and B. The test was performed in a generally similar manner as described in U.S. Patent No. 5,626,512 (Palaikis et al). The fibrous filler materials were cut into a circular pad (8.25 cm in diameter). The test was conducted with the circular fibrous filler pads rotating at about 250 rpm for 5000 revolutions under a load of 2.25 kg with water applied to the surface of the circular acrylic work piece (10.16 cm in diameter) at a rate of 40-60 drops per minute. Results are given as a visual rating, or an average of a visual rating of three samples, from 1 to 5 of the scratch pattern remaining on the acrylic disk. Schiefer scratch visual ratings are provided in Table 3.

Table 3.

| Visual Scratch Rating | Description | Acceptance Criteria |
|---|---|---|
| 1 | No visible scratches to very light scratches. | Pass |
| 2 | Scratches are light, but more frequent and more visible. | Pass |
| 3 | Scratches are light, but more visible with well-defined scratch patterns. | Pass |
| 4 | Easily visible scratch pattern covering entire with well-defined scratch patterns. | Fail |

(continued)

| Visual Scratch Rating | Description | Acceptance Criteria |
|---|---|---|
| 5 | Scratch pattern so frequent entire workpiece is opaque and weight loss of the sample is observed. | Fail |

The results of the Schiefer Scratch test are provided in Table 4.

Table 4.

| Example | Schiefer Scratch Test (pass/fail) |
|---|---|
| Example 1 | Pass |
| Comparative Example A | Pass |
| Comparative Example B | Pass |

Article Cleaning Efficacy Test

The article cleaning efficacy test was performed in a generally similar manner as described in U.S. Patent No. 5,626,512 (Palaikis et al). A 8.25 cm in diameter 18-gauge stainless steel panel was coated with a food soil mixture made up of 120 grams milk, 60 grams cheddar cheese, 120 grams hamburger, 120 grams tomato juice, 120 grams cherry juice, 20 grams flour, and 100 granulated sugar, and one egg. The coated panel was baked in an oven at 230°C for 14 minutes with the final coated weight less than 0.5 gram.

Example 1 covered with polypropylene mesh from SCOTCH-BRITE™ Dobie Scouring Pads and Comparative Examples A and B were cut into a circular pad (8.25 cm in diameter). Using the same instrument as in the Schiefer scratch test, the test was conducted with the samples rotating at 250 rpm for 20 minutes under a load of 2.25 kg with water applied to the surface of the circular coated panel (10.16 cm in diameter) at a rate of 60-80 drops per minute. The samples were then run back and forth on the coated panel under an applied force of 2.25 kg until the coated panel was clean (no coated material visually remained on the panel). The number of cycles (with a rate of approximately 267 revolutions per minute) required to result in a clean panel was recorded. If 20 minutes were not reached, an additional food soil panel was then placed in the holder and continued until reaching 20 minutes. Results are given in the number of panels cleaned in 20 minutes. The results of the Schiefer Scratch test are provided in Table 5.

Table 5.

| Example | Cleaning Efficacy Test (# Panels Cleaned in 20 Minutes) |
|---|---|
| Example 1 | 2.5 |
| Comparative Example A | 2.5 |
| Comparative Example B | 2.5 |

Article Sudsing Test

Example 1 covered with polypropylene mesh from SCOTCH-BRITE™ Dobie Scouring Pads and Comparative Examples A and B were rinsed clean. The samples were then fully submerged in a tray containing approximately 500 ml of a 4% aqueous dish soap solution. The samples were squeezed by hand less than 5 times until sudsing was visually seen. Visual ratings are provided in Table 6.

Table 6.

| Visual Sudsing Rating | Description | Acceptance Criteria |
|---|---|---|
| 1 | No visible sudsing. | Fail |
| 2 | Light too no sudsing. | Fail |
| 3 | Moderate sudsing. | Pass |
| 4 | Significant sudsing. | Pass |

The results of the sudsing test are provided in Table 7 below.

Table 7.

| Example | Sudsing Test (pass/fail) |
|---|---|
| Example 1 | Pass |
| Comparative Example A | Pass |
| Comparative Example B | Pass |

Article Water Absorption Test for X Time its Own Weight

The water absorption for Examples 1-5 and Comparative Examples A and B were determined for the maximum amount of water they could. To test for water absorption, only the fibrous fillers of Examples 1 - 5 and the foam fillers of Comparative Examples A and B were tested. The samples were rinsed clean by running water through them and wringing them out until the samples stop sudsing. The samples were placed into 200°F oven to dry and were dried until their weight did not change. The dry weight was recorded, "A". The samples were then immersed in warm tap water, approximately 46° C, squeezed to remove entrapped air, and then were allowed to absorb water for approximately one minute. The samples were then removed and allowed to air drip for one minute to remove excess water. The initial weight of each sample was recorded as "A" and the wet weight after 20 seconds was recorded as "B". The filler water absorption, "C" is defined as the total amount of water retained from its original dry weight and is calculated using the following formula:

$$\text{Filler Water Absorption } C=(B-A)/A$$

The results of the Article Water Absorption Test for the fillers of Examples 1-5 and Comparative Examples A and B are provided in Table 8.

Table 8.

| Example | Initial weight (g) | Wet Weight after 20 sec (g) | Water absorption X times dry weight (g/g) |
|---|---|---|---|
| Example 1 | 2.98 | 93.90 | 30.51 |
| Example 2 | 2.98 | 89.16 | 28.92 |
| Example 3 | 2.62 | 69.05 | 25.35 |
| Example 4 | 2.63 | 74.5 | 27.33 |
| Example 5 | 3.08 | 75.50 | 23.51 |
| Comparative Example A | 2.66 | 13.78 | 4.18 |
| Comparative Example B | 5.33 | 57.03 | 9.70 |

Material Density Test

The length (l), width (w) and thickness (t) of the fibrous fillers of Examples 1 - 5 and the foam fillers of Comparative Examples A and B were measured material in millimeters using the digital caliper (500-196-30, Mitutoyo). The Volume (m$^3$) of each sample was calculated by multiplying the length, width, and thickness of each sample and then recorded. The material dry weight (g) was measured using a digital balance (PM 400 from Mettler Toledo) recorded to the nearest 0.001 gram. The density of the samples were calculated using the following formula:

$$\text{Density = Dry Weight (g)/Volume (m}^3)$$

The results of the Material Density Test are provided below in Table 9.

Table 9.

| Example | Density Test (g/m$^3$) |
|---|---|
| Example 1 | 0.020 |
| Example 2 | 0.013 |
| Example 3 | 0.017 |
| Example 4 | 0.015 |
| Example 5 | 0.017 |
| Comparative Example A | 0.035 |
| Comparative Example B | 0.045 |

Article Compression Test

Resistance to compression is defined as the force in Newton to compress an article to set point of 10 millimeters. A LF Plus Tensile Frame from Chatillon was used to perform the test. The dimensions of the top plate were 5.5 inches by 4 inches. A 5,000 N load cell was installed in the tensile tester. The rate of compression was set to 100 mm/min. The fibrous nonwoven fillers of Examples 1 - 5 and the foam fillers of Comparative Examples A and B were placed into the holder of tensile tester. The force in kilogram-force (kgf) required to compress the sample reported by tensile tester was recorded. The results of the Article Compression Test are provided in Table 10.

Table 10.

| Example | Compression Test (Kgf) |
|---|---|
| Example 1 | 1.22 |
| Example 2 | 1.83 |
| Example 3 | 0.61 |
| Example 4 | 1.66 |
| Example 5 | 1.79 |
| Comparative Example A | 9.95 |
| Comparative Example B | 30.41 |

Non-Woven Fibers Dimension Test

The fibers diameter of the filler material of Examples and Comparative Examples was measured with an optical microscope instrument (VHX Digital Microscope from Keyence). The samples were viewed under the microscope at 200x magnification and images were taken of them. The images were then used in conjunction with the scale bar to determine the diameter of the fiber in millimeters. The fiber dimensions are listed below in Table 11.

Table 11.

| Example | Non-Woven Fibers Dimension Test (mm) |
|---|---|
| Example 1 | 0.022 |
| Example 2 | 0.025 |
| Example 3 | 0.074 |
| Example 4 | 0.077 |
| Example 5 | 0.065 |
| Comparative Example A | - |
| Comparative Example B | - |

Although specific embodiments of this invention have been shown and described herein, it is understood that these embodiments are merely illustrative of the many possible specific arrangements that can be devised in application of the invention. Numerous and varied other arrangements can be devised by those of ordinary skill in the art without departing from the scope of the invention. Thus, the scope of the present invention should be limited only to the structures described by the claims.

## Claims

1. A cleaning article (10) comprising:

   a fibrous filler (12) being non-bonded or bonded via melty fibers; and
   a wrapping (14) comprising a mesh-like material at least partially surrounding the fibrous filler (12).

2. The cleaning article (10) of claim 1, wherein the cleaning article (10) has a Schiefer scratch rating of about 3.5 or less.

3. The cleaning article (10) of claim 1, wherein at least one of the fibrous filler (12) and the wrapping (14) is at least partially composed of a sustainable material.

4. The cleaning article (10) of claim 1, wherein the fibrous filler (12) has a density of about 0.03 $g/m^3$ or less.

5. The cleaning article (10) of claim 1, wherein the fibrous filler (12) has a compression of about 9 Kgf or less.

6. The cleaning article (10) of claim 5, wherein the fibrous filler (12) has a compression of about 4 Kgf or less.

7. The cleaning article (10) of claim 1, wherein the fibrous filler (12) comprises fibers having a denier of between about 2 and about 1000.

8. The cleaning article (10) of any of the previous claims, wherein the cleaning article is a scouring pad for household, wherein the scouring pad cleans at least about 0.1 food soil panels in 5,550 cycles.

## Patentansprüche

1. Ein Reinigungsgegenstand (10), aufweisend:

   einen faserigen Füllstoff (12), der ungebunden oder über Schmelzfasern gebunden ist; und
   eine Umhüllung (14), aufweisend ein netzartiges Material, das den faserigen Füllstoff (12) mindestens teilweise umgibt.

2. Der Reinigungsgegenstand (10) nach Anspruch 1, wobei der Reinigungsgegenstand (10) eine Schiefer-Kratzeinstufung von etwa 3,5 oder weniger vorweist.

3. Der Reinigungsgegenstand (10) nach Anspruch 1, wobei mindestens eines des faserigen Füllstoffs (12) und der Umhüllung (14) mindestens teilweise aus einem nachhaltigen Material besteht.

4. Der Reinigungsgegenstand (10) nach Anspruch 1, wobei der faserige Füllstoff (12) eine Dichte von etwa 0,03 $g/m^3$ oder weniger aufweist.

5. Der Reinigungsgegenstand (10) nach Anspruch 1, wobei der faserige Füllstoff (12) eine Kompression von etwa 9 Kgf oder weniger aufweist.

6. Der Reinigungsgegenstand (10) nach Anspruch 5, wobei der faserige Füllstoff (12) eine Kompression von etwa 4 Kgf oder weniger aufweist.

7. Der Reinigungsgegenstand (10) nach Anspruch 1, wobei der faserige Füllstoff (12) Fasern umfasst, die einen Denierwert von zwischen etwa 2 und etwa 1000 aufweist.

**8.** Der Reinigungsgegenstand (10) nach einem der vorstehenden Ansprüche, wobei der Reinigungsgegenstand ein Scheuerschwamm für den Haushalt ist,
wobei der Scheuerschwamm in 5.550 Zyklen mindestens etwa 0,1 Lebensmittelverschmutzungsfelder reinigt.

**Revendications**

**1.** Article de nettoyage (10) comprenant :

une charge fibreuse (12) étant non liée ou liée par l'intermédiaire des fibres fondues ; et
une enveloppe (14) comprenant un matériau en forme de maille entourant au moins partiellement la charge fibreuse (12).

**2.** Article de nettoyage (10) selon la revendication 1, dans lequel l'article de nettoyage (10) a un indice de rayure Schiefer d'environ 3,5 ou moins.

**3.** Article de nettoyage (10) selon la revendication 1, dans lequel au moins l'une parmi la charge fibreuse (12) et l'enveloppe (14) est au moins partiellement composée d'un matériau durable.

**4.** Article de nettoyage (10) selon la revendication 1, dans lequel la charge fibreuse (12) a une densité d'environ 0,03 $g/m^3$ ou moins.

**5.** Article de nettoyage (10) selon la revendication 1, dans lequel la charge fibreuse (12) a une compression d'environ 9 kgf ou moins.

**6.** Article de nettoyage (10) selon la revendication 5, dans lequel la charge fibreuse (12) a une compression d'environ 4 kgf ou moins.

**7.** Article de nettoyage (10) selon la revendication 1, dans lequel la charge fibreuse (12) comprend des fibres ayant un denier compris entre environ 2 et environ 1 000.

**8.** Article de nettoyage (10) selon l'une quelconque des revendications précédentes, dans lequel l'article de nettoyage est un tampon à récurer pour le ménage,
dans lequel le tampon à récurer nettoie au moins environ 0,1 panneau de sallissure alimentaire en 5 550 cycles.

*Fig. 1*

**Fig. 2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2958593 A
- WO 00006341 A
- US 5712210 A
- WO 2018063458 A1
- EP 1023884 A2
- WO 9961693 A
- WO 2006092029 A
- US 5626512 A, Palaikis

### Non-patent literature cited in the description

- **RUSSELL S. J.** Handbook of Nonwovens. Woodhead Publishing Limited, 2007